# EUROPÄISCHE PATENTANMELDUNG

(11) **EP 2 524 828 A1**
(43) Veröffentlichungstag der Anmeldung: **21.11.2012**
(21) Anmeldenummer: 11004057.3
(22) Anmeldetag: 17.05.2011
(51) Int. Cl.: B60G 99/00, B60G 15/06, B60G 11/27, B60G 11/28

(54) **Lager sowie Lageranordnung**

(71) Anmelder: Carl Freudenberg KG, 69469 Weinheim (DE)
(72) Erfinder: Ebert, Michael, 13055 Berlin (DE); Erl, Andreas Peter, 16761 Henningsdorf (DE)

(57) **Zusammenfassung**

Die vorliegende Erfindung betrifft ein Lager (102), aufweisend: einen Topf (108); eine Gummifeder (110), welche dazu eingerichtet ist, sich an ihrer einen Seite (116) an einem ersten Körper (104) abzustützen, und welche an ihrer anderen Seite (118) mit dem Topf (108) gekoppelt ist; einen Stoßdämpfer (112), welcher einen Zylinder (120) und einen in diesem geführten Kolben (122) umfasst, wobei der Zylinder (120) dazu eingerichtet ist, sich an einem zweiten Körper (106) abzustützen, und der Kolben (122) mit dem Topf (108) verbunden ist; und einen Balg (114), welcher zusammen mit dem Zylinder (120) ein als Gasfeder fungierendes Gasvolumen (124) zumindest abschnittsweise umschließt und sich zumindest abschnittsweise an dem Topf (108) abstützt.

## Beschreibung

### Technisches Gebiet

Die vorliegende Erfindung betrifft ein Lager sowie eine Lageranordnung.

### Stand der Technik

Ganz allgemein werden schwingungstechnische Lagerelemente, kurz Lager, dazu eingesetzt, Schwingungen zu isolieren oder zu dämpfen und die Geräuschbelastung zu senken. Typische Einsatzfälle sind die Lagerung von Kabinen, Motoren, Getrieben, allgemeine Maschinen, Aggregaten und Vorrichtungen insbesondere gegenüber einem Rahmen oder Gestell.

Beispielsweise beschreibt die Druckschrift GB 1501110 eine Hinterachslageranordnung eines Fahrzeugs. Die Lageranordnung umfasst einen Karosserieabschnitt, welcher mittels eines Lagers mit einer Hinterradschwinge gekoppelt ist. Das Lager umfasst einen fest mit dem Karosserieabschnitt verbundenen Topf, einen Balg, welcher mit dem Topf ein Fluidvolumen umschließt, und einen Kolben, welcher einerseits mit der Hinterradschwinge verbunden ist und andererseits auf den Balg wirkt, um diesen dadurch zu verformen und somit das Fluid aus dem Topf in einen angeschlossenen Federspeicher zu transferieren, wodurch bestimmte Feder- und Dämpfungseigenschaften erzielt werden.

Nachteilig bei dem aus der GB 1501110 bekannten Ansatz ist, dass die Elastomerfeder nicht mittels elementarer Fügeoperationen montierbar ist, oder mittels einfacher Formgebung an den Topf oder andere Elemente des Lagers vulkanisierbar ist. Der Zusammenbau ist das Ergebnis einer komplexen Montagefolge.

Weiterhin ist aus der Druckschrift DE 198 26 480 B4 eine Lageranordnung für Fahrzeuge bekannt, welche einen Karosserieabschnitt aufweist, der sich über ein Lager am Fahrwerk abstützt. Der Karosserieabschnitt ist mit einem Dom ausgebildet, welcher an seinem oberen Ende eine Gummifeder trägt. An der Gummifeder ist ein Ende einer Kolbenstange befestigt. Das andere Ende der Kolbenstange reicht in einen Zylinder hinein, mit welchem sie einen Stoßdämpfer bildet. Ein Balg schließt einerseits mit einer Mantelfläche des Zylinders ab und reicht andererseits in den Dom hinein. Somit bilden der Balg, der Zylinder und die Gummifeder ein geschlossenes Volumen aus. Indem Luft in dieses Volumen eingebracht oder aus diesem entnommen wird, kann die Höhe des Fahrzeugs eingestellt werden.

Nachteilig bei dem aus der DE 198 26 480 B4 bekannten Ansatz hat sich herausgestellt, dass die Gummispur eher für kleine statische Kräfte im Arbeitspunkt des Luftfedersystems in axialer Richtung des Stoßdämpfers geeignet ist und daher nicht allgemein anwendbar ist. Auch ist dieses Luftfedersystem nicht für die Übertragung größerer Querkräfte ausgestaltet.

### Aufgabe der Erfindung

Der Erfindung liegt somit die Aufgabe zugrunde, ein verbessertes Lager bereitzustellen, welches insbesondere die vorstehend beschriebenen Nachteile zumindest reduziert.

### Gegenstand der Erfindung

Diese Aufgabe wird gelöst durch ein Lager mit den Merkmalen des Patentanspruchs 1 sowie durch eine Lageranordnung mit den Merkmalen des Patentanspruchs 15.

Demgemäß wird ein Lager aufweisend: einen Topf; eine Gummifeder, welche dazu eingerichtet ist, sich an ihrer einen Seite an einem ersten Körper abzustützen, und welche an ihrer anderen Seite mit dem Topf gekoppelt ist; einen Stoßdämpfer, welcher einen Zylinder und einen in diesem geführten Kolben umfasst, wobei der Zylinder dazu eingerichtet ist, sich an einem zweiten Körper abzustützen, und der Kolben mit dem Topf verbunden ist; und einem Balg, welcher zusammen mit dem Zylinder ein als Gasfeder fungierendes Gasvolumen zumindest abschnittsweise umschließt und sich zumindest abschnittsweise an dem Topf abstützt; bereitgestellt.

Weiterhin wird eine Lageranordnung, aufweisend einen ersten Körper in Form eines Rahmens eines Fahrzeugs, einen zweiten Körper in Form einer Kabine oder Achse des Fahrzeugs und das erfindungsgemäße Lager, welches die Kabine oder Achse gegen den Rahmen abstützt, bereitgestellt.

Die der vorliegenden Erfindung zugrunde liegende Idee besteht darin, dass sich der Topf mittels der Gummifeder an dem ersten Körper abstützt und gleichzeitig der Kolben des Stoßdämpfers mit dem Topf verbunden ist. Dadurch ergibt sich ein einfacher Aufbau des Lagers. Weiterhin ergibt sich eine hohe Steifigkeit des Lagers in einer Richtung quer zur Einfederungseinrichtung. Noch weiterhin wird das Gasvolumen der Gasfeder ausschließlich von vergleichsweise nicht elastischen Elementen begrenzt, so dass für bestimmte Anwendungen die miteinander wirkenden Federn (Steifigkeit der Gasfeder, des Balgs sowie der Gummifeder) weitgehend unabhängig voneinander eingestellt werden können.

Aus den Unteransprüchen ergeben sich vorteilhafte Ausgestaltungen der Erfindung.

Gemäß einer Ausgestaltung des erfindungsgemäßen Lagers weist der Topf eine Wand und einen Boden auf, wobei der Kolben mit dem Boden des Topfes verbunden ist und/oder der Balg an seinem einen Ende zwischen die Wand und den Boden geklemmt ist und diese gegeneinander abdichtet. Die Befestigung des Kolbens am Boden des Topfes kann dabei winkeltreu oder winkelveränderlich vorgesehen sein. Für eine winkeltreue Befestigung ist der Kolben beispielweise fest mit dem Boden verschraubt. Für eine winkelveränderliche Befestigung des Kolbens wird dieser beispielsweise mittels eines Kugelgelenks mit dem Boden des Topfes verbunden. Mit dem "einen Ende" des Balgs ist insbesondere ein umlaufender Rand des Balgs gemeint. Indem das Ende zwischen der Wand und dem Boden geklemmt wird, ergibt sich eine einfache Möglichkeit der Abdichtung. Entsprechend kann auch der Zylinder an dem zweiten Körper winkeltreu oder winkelveränderlich befestigt sein.

Gemäß einer weiteren Ausgestaltung des erfindungsgemäßen Lagers ist der Balg an seinem anderen Ende an dem Zylinder dichtend angebracht und weist einen Durchtritt für den Kolben auf. Mit dem "anderen Ende" des Balgs ist insbesondere ein umlaufender (ggf. weiterer) Rand des Balgs gemeint. Aufgrund des Durchtritts in dem Balg kann sich der Kolben einfach von dem Zylinder zu dem Boden des Topfes erstrecken.

Gemäß einer weiteren Ausgestaltung des erfindungsgemäßen Lagers ist das andere Ende des Balgs mittels einer Klemmeinrichtung an dem Zylinder angebracht, wobei die Klemmeinrichtung einen Klemmring, welcher das andere Ende des Balgs reibschlüssig und gegebenenfalls formschlüssig gegen einen ersten Abschnitt des Zylinders klemmt, und bevorzugt ein Spreizteil aufweist, welches zwischen den Klemmring und einem zweiten Abschnitt des Zylinders eingespreizt ist, um den Klemmring mit einer Kraft für das Klemmen zu beaufschlagen. Der Formschluss kann dadurch erreicht werden, dass das andere Ende des Balgs einen abgewinkelten Verlauf aufweist und gleichzeitig geklemmt wird. Dazu wird das andere Ende des Balgs bevorzugt um eine Ecke des ersten Abschnitts des Zylinder gelegt und daraufhin zwischen der Ecke und dem Klemmring geklemmt. Damit wird eine sehr belastbare Befestigung des Balgs an dem Zylinder erzielt.

Gemäß einer weiteren Ausgestaltung des erfindungsgemäßen Lagers weist der zweite Abschnitt des Zylinders eine Nut auf, in weiche das Spreizteil eingreift. Dadurch kann für eine einfache Befestigung des Spreizteils an dem zweiten Abschnitt des Zylinders gesorgt werden.

Gemäß einer weiteren Ausgestaltung des erfindungsgemäßen Lagers umfasst der erste Abschnitt des Zylinders eine Mantelfläche und/oder eine Stirnfläche, wobei der Klemmring einen ersten Klemmabschnitt für ein Klemmen des anderen Endes des Balgs radial zur Kolbenachse gegen die Mantelfläche und/oder einen zweiten Klemmabschnitt für ein Klemmen des anderen Endes des Balgs entlang der Kolbenachse gegen die Stirnfläche aufweist. Der erste und zweite Klemmabschnitt des Klemmrings stellen sicher, dass das andere Ende des Balgs in seinem den ersten Abschnitt des Zylinders umschlingenden Zustand gehalten wird.

Gemäß einer weiteren Ausgestaltung des erfindungsgemäßen Lagers ist der zweite Klemmabschnitt mit einer Vertiefung ausgebildet, in welche sich das Spreizteil zumindest abschnittsweise hineinerstreckt. Dadurch kann der für die Klemmeinrichtung erforderliche Raum entlang der Kolbenachse verringert werden.

Gemäß einer weiteren Ausgestaltung des erfindungsgemäßen Lagers ist der Topf mit einem Flansch gebildet, welcher mit der Gummifeder, insbesondere mittels einer Schraube oder eines Niets gekoppelt ist. Dadurch können der Stoßdämpfer und die Gummifeder einfach kinematisch in Reihe geschaltet werden. Die Gummifeder erlaubt außerdem vorteilhaft eine gewisse Beweglichkeit der Anordnung, bestehend aus dem zweiten Körper, dem Stoßdämpfer und dem Topf, gegenüber dem ersten Körper in einer Richtung senkrecht zur Einfederungsrichtung.

Gemäß einer weiteren Ausgestaltung des erfindungsgemäßen Lagers weist die Gummifeder ein in ein Gummiteil derselben einvulkanisiertes oder ein an diese anvulkanisiertes Stützteil auf, welches einen ersten Abschnitt, der sich koaxial zur Wand des Topfes erstreckt, und/oder einen zweiten Abschnitt aufweist, der sich parallel zu dem Flansch erstreckt. Das Stützteil versteift vorteilhaft die Gummifeder. Die Gummifeder (gegebenenfalls samt Stützteil) kann dabei derart vorgesehen sein, dass der Topf gegen diese in einer Richtung radial zur Kolbenachse anliegt. Insbesondere kann eine weitere Wand des Topfes, welche benachbart zu der Wand des Topfes angeordnet ist, mit der Gummifeder in Berührung stehen. Dadurch können sich je nach Anwendungsfall vorteilhafte Dämpfungs- und Steifigkeitseigenschaften des Lagers ergeben.

Gemäß einer weiteren Ausgestaltung des erfindungsgemäßen Lagers ist der zweite Abschnitt des Stützteils mit der Schraube oder dem Niet verbunden, insbesondere formschlüssig verbunden, verschweißt oder verlötet. Gemäß einer Ausgestaltung hintergreift der Kopf der Schraube den zweiten Abschnitt des Stützteils. Alternativ ist ein Schaft des Niets oder der Schraube mit dem zweiten Abschnitt des Stützteils verschweißt oder verlötet.

Gemäß einer weiteren Ausgestaltung des erfindungsgemäßen Lagers weist der Topf ein topfförmiges Teil, insbesondere ein Zieh- oder Gussteil, und/oder einen rohrförmigen Einsatz auf, wobei bevorzugt ein erster Abschnitt des topfförmigen Teils den Boden des Topfs, der rohrförmige Einsatz die Wand des Topfs und/oder ein zweiter Abschnitt des topfförmigen Teils eine weitere Wand des Topfs gegen welche die Wand des Topfs in radialer Richtung bevorzugt anliegt, bildet. Gemäß einer Ausgestaltung ist der Topf somit in radialer Richtung mit Bezug auf die Kolbenachse doppelwandig ausgebildet, wobei die Innenwand von dem Einsatz und die Außenwand von dem zweiten Abschnitt des topfförmigen Teils gebildet wird.

Gemäß einer weiteren Ausgestaltung des erfindungsgemäßen Lagers ist der Flansch an dem offenen Ende des Topfes angeordnet und/oder der Flansch setzt sich aus einem ersten Abschnitt, welcher mit dem rohrförmigen Einsatz insbesondere einstückig verbunden ist, und einem zweiten Abschnitt zusammen, welcher mit dem topfförmigen Teil insbesondere einstückig verbunden ist, zusammen, wobei sich die Schraube und/oder der Niet bevorzugt durch jeweilige Öffnungen in dem ersten und zweiten Abschnitt erstreckt. Der Flansch kann somit einen zweistückigen Aufbau (erster und zweiter Abschnitt) aufweisen. Alternativ kann der Flansch lediglich von dem ersten Abschnitt oder lediglich von dem zweiten Abschnitt gebildet sein. Der doppelwandige (zweistückige) Flansch weist vorteilhaft jedoch eine höhere Stabilität auf.

Gemäß einer weiteren Ausgestaltung des erfindungsgemäßen Lagers ist der Flansch mit dem Boden des Topfes außenseitig verbunden, insbesondere verschweißt oder verklebt, und/oder der Topf ist innenseitig mit dem Kolben verbunden. Dadurch kann die Kolbenkraft noch direkter in die Gummifeder eingeleitet werden und muss nicht zunächst durch die Wand oder weitere Wand des Topfes geleitet werden.

Gemäß einer weiteren Ausgestaltung des erfindungsgemäßen Lagers ist der Topf mittels Stützarmen mit dem Flansch verbunden. Die Stützarme wirken einem Ver biegen des Flansches unter Last entgegen. Die Stützarme können beispielsweise aus Kunststoff oder Metall hergestellt sein. Der Topf ist bevorzugt als Aluminiumdruckgussteil hergestellt.

Die Erfindung wird nachfolgend anhand von Ausführungsbeispielen unter Bezugnahme auf die beiliegenden Figuren der Zeichnung näher erläutert.

Es zeigen:
- Fig. 1: eine Lageranordnung gemäß einem Ausführungsbeispiel der vorliegenden Erfindung, wobei ein Lager derselben zur Hälfte und geschnitten dargestellt ist;
- Fig. 2: eine Variante gegenüber Figur 1 mit verändertem Kolben und veränderter Gummifeder;
- Fig. 3: eine mögliche Ausführungsform einer Klemmeinrichtung aus Figur 1 in geschnittener und halbseitiger Darstellung;
- Fig. 4: eine Variante gegenüber Figur 3;
- Fig. 4a: in einer Draufsicht ein Spreizteil aus Fig. 4;
- Fig. 5: eine noch weitere Variante gegenüber Figur 3;
- Fig. 6: eine noch weitere Variante gegenüber Figur 3;
- Fig. 7: eine weitere Variante gegenüber Figur 2, wobei ein verschweißter Bolzenschaft und ein verschweißter Nietschaft vorgesehen sind;
- Fig. 8: eine Variante gegenüber Figur 7 mit veränderter Gummifeder und einem Bolzen anstelle des in Figur 7 vorgesehenen Niets;
- Fig. 9: eine Variante gegenüber Figur 8 mit veränderter Gummifeder;
- Fig. 10: eine Variante gegenüber Figur 9 mit weiter veränderter Gummifeder;
- Fig. 11: eine Variante gegenüber Figur 2, wobei ein Flansch des Lagers an einem Boden eines Topfes des Lagers angeordnet ist; und
- Fig. 12: eine noch weitere Variante gegenüber Figur 2, wobei der Flansch zwischen dem offenen Ende des Topfes und dem Boden des Topfes in etwa auf halbem Wege angeordnet ist.

In den Figuren bezeichnen gleiche Bezugszeichen gleiche oder funktionsgleiche Komponenten.

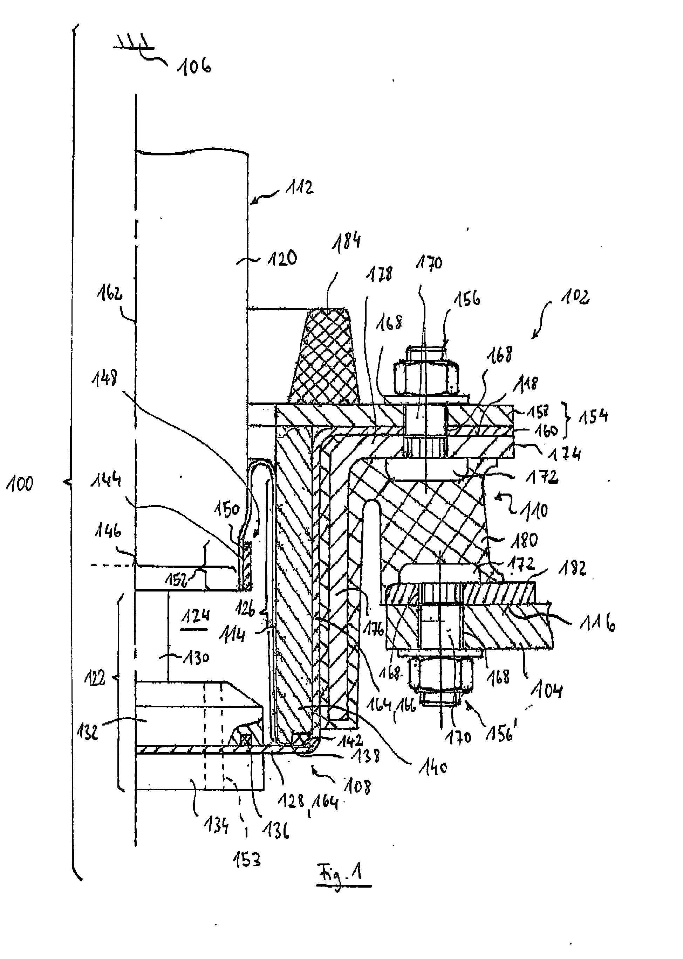

Figur 1 zeigt eine Lageranordnung 100 gemäß einem Ausführungsbeispiel der vorliegenden Erfindung, wobei ein Lager 102 derselben zur Hälfte und geschnitten dargestellt ist.

Die Lageranordnung 100 umfasst einen ersten Körper 104 beispielsweise in Form eines Rahmens eines Fahrzeugs. Weiterhin umfasst die Lageranordnung 100 einen zweiten Körper 106 beispielsweise in Form einer Kabine des Fahrzeugs. Der zweite Körper 106 ist lediglich schematisch dargestellt. Das Lager 102 stützt die Kabine 106 gegen den Rahmen 104 ab, wozu das Lager 102 sowohl mit dem Rahmen 104 als auch mit der Kabine 106 (insoweit nicht näher dargestellt) verbunden ist.

Das Lager 102 umfasst insbesondere einen Topf 108, eine Gummifeder 110, einen Stoßdämpfer 112 und einen Balg 114.

Die Gummifeder 110 ist dazu eingerichtet, sich an ihrer einen Seite 116 an dem Rahmen 104 abzustützen. An ihrer anderen Seite 118 trägt sie den Topf 108.

Der Stoßdämpfer 112 umfasst einen Zylinder 120 und einen in diesem geführten Kolben 122. Der Zylinder 120 ist dazu eingerichtet, sich an der Kabine 106 abzustützen. Der Kolben 122 ist mit dem Topf 108 verbunden.

Der Balg 114 bildet zusammen mit dem Zylinder 120 ein als Gasfeder fungiertes Gasvolumen 124. Der Balg 114 stützt sich dabei mit einem Abschnitt 126 desselben an dem Topf 108 ab. Bei dem Gasvolumen 124 handelt es sich typischerweise um Luft.

Der Topf 108 umfasst einen Boden 128, welcher mit dem Kolben 122 verbunden ist. Dazu kann der Kolben 122 sich aus einer Kolbenstange 130, einem ersten Klemmteil 132 und einem zweiten Klemmteil 134 zusammensetzen. Die Kolbenstange 130 ist mit dem ersten Klemmteil 132 verbunden, insbesondere verschraubt. Das zweite Klemmteil 134 ist wiederum mit dem ersten Klemmteil 132 derart verbunden, insbesondere verschraubt, dass zwischen dem ersten Klemmteil 132 und dem zweiten Klemmteil 134 der Boden 128 eingeklemmt ist. Um für eine Abdichtung des Gasvolumens 124 gegenüber der Umgebung zu sorgen, kann eine Dichtung 136, beispielsweise in dem ersten Klemmteil 132, vorgesehen sein.

Anstelle dieser winkeltreuen Verbindung zwischen dem Kolben 122 und dem Topf 128 kann auch eine winkelveränderliche Verbindung, insbesondere in Form eines Kugelgelenks, zwischen der Kolbenstange 130 und dem Boden 128 des Topfs 108 vorgesehen sein.

Der Balg 114 ist an seinem einen Ende 138 zwischen einer Wand 140 des Topfs 108 und dem Boden 128 geklemmt, so dass einerseits eine gute Befestigung des Balgs 114 und andererseits eine Dichtigkeit des Gasvolumens 124 gegenüber der Umgebung erzielt wird. Bevorzugt ist das Ende 138 des Balgs 114 mit einer Wulst 142 vorgesehen, welche in einer Aussparung in der Wand 140 angeordnet ist und zwischen der Wand 140 und dem Boden 128 geklemmt wird.

An seinem anderen Ende 144 ist der Balg 114 dichtend an dem Zylinder 120 angebracht, so dass sich ein Durchtritt 146 ergibt, durch welchen der Kolben 122 hin zu dem Boden 128 des Topfs 108 hindurchreichen kann. Das andere Ende 144 des Balgs 114 ist mittels einer Klemmeinrichtung 148 an dem Zylinder 120 angebracht. Gemäß dem Ausführungsbeispiel nach Figur 1 umfasst die Klemmeinrichtung 148 einen Klemmring 150, welcher das andere Ende 144 des Balgs 114 reibschlüssig gegen einen Abschnitt 152 des Zylinders 120 klemmt. Damit ist der Balg 114 an seinem anderen Ende 144 gegenüber dem Zylinder 120 abgedichtet, so dass sich das geschlossene Gasvolumen 124 ergibt. Nichtsdestotrotz kann das Gasvolumen 124 über eine Verbindungsleitung mit einem Druckspeicher und einer Druckregeleinrichtung strömungsleitend verbunden sein, um dadurch die Höhe und/oder die fahrdynamischen Eigenschaften des Fahrzeugs einzustellen. Beispielsweise kann eine solche Verbindungsleitung 153 die Elemente 134, 128, 132 durchgreifen und in das Gasvolumen 124 münden.

Der Topf 108 ist weiterhin mit einem Flansch 154 gebildet, welcher beispielsweise mittels einer ersten Schraube 156 mit der Gummifeder 110 verbunden ist. Der

Flansch 154 setzt sich beispielsweise aus einem ersten Abschnitt 158 und einem zweiten Abschnitt 160 zusammen. Der erste Abschnitt 158 ist beispielsweise mit der Wand 140 des Topfs 108 verbunden, welche gemäß dem vorliegenden Ausführungsbeispiel als rohrförmiger Einsatz gebildet ist. Der erste Abschnitt 158 kann beispielsweise mit dem Einsatz 140 mittels Nietens, Bördelverbindens oder Falzens verbunden sein. Alternativ kann der erste Abschnitt 158 auch einstückig mit dem Einsatz 140 gebildet sein. Beispielsweise können der erste Abschnitt 158 und der Einsatz 140 als ein einziges Kunststoffspritzgussteil gefertigt sein. Der Einsatz bzw. die Wand 140 bildet dabei eine innere Wand des Topfes 108 mit Bezug auf die Kolbenachse 162. "Kolbenachse" meint vorliegend die Kolbenlängsachse.

Der Topf 108 kann weiterhin ein topfförmiges Teil 164 umfassen, welches den Boden 128 sowie eine äußere Wand 166 des Topfes 108 bildet. An das offene Ende der äußeren Wand 166 schließt sich wiederum der zweite Abschnitt 160 des Flanschs 154 an, so dass sich der Boden 128, die äußere Wand 166 und der zweite Abschnitt 160 zu einer Hutform ergänzen. Auch der zweite Abschnitt 160 kann auf die bereits für den ersten Abschnitt 158 und den Einsatz 140 beschriebene Weise an die äußere Wand 166 anschließen. Der Einsatz 140 sitzt bevorzugt spielfrei in dem topfförmigen Teil 164.

Der erste Abschnitt 158 und der zweite Abschnitt 160 des Flansches 154 weisen bevorzugt jeweils Öffnungen 168 auf, durch welche sich ein Schraubenschaft 170 der Schraube 156 erstreckt. Der Schraubenschaft 170 kann wiederum an seinem Ende einen Schraubenkopf 172 aufweisen, welcher in die Gummifeder 110 formschlüssig eingreift, insbesondere in diese einvulkanisiert ist.

Die Gummifeder 110 umfasst ein Gummiteil 180, in welche ein erstes Stützteil 174 einvulkanisiert ist. Das erste Stützteil 174 umfasst einen ersten Abschnitt 176, welcher sich koaxial zur Wand 140, also entlang der Kolbenachse 162 erstreckt. Weiterhin umfasst das erste Stützteil 174 einen zweiten Abschnitt 178, welcher sich parallel zu dem Flansch 154 erstreckt. Der erste und zweite Abschnitt 176, 178 bilden im Querschnitt gesehen einen Winkel miteinander. Bevorzugt hintergreift der Schraubenkopf 172 den zweiten Abschnitt 178 des ersten Stützteils 174.

Weiterhin kann vorgesehen sein, dass die Außenwand 166 des Topfes 108 gegen die Gummifeder 110, insbesondere das Gummiteil 180, in radialer Richtung in Bezug auf die Kolbenachse 162 anliegt. Das Gummiteil 180 hält ein zweites Stützteil 182, welches an das Gummiteil 180 anvulkanisiert ist, gegenüber dem ersten Stützteil 174 in einer Richtung entlang der Kolbenachse 162 beabstandet. Die Gummifeder 110 ist mit einer zweiten Schraube 156' mit dem Rahmen 104 verschraubt. Dabei hintergreift ein Schraubenkopf 172 das zweite Stützteil 182.

Das Lager kann weiterhin einen Abstandshalter 184, insbesondere aus Gummi, aufweisen, welcher bei großen Einfederungsamplituden die Kabine 106 von dem Flansch 154 beabstandet. Dazu ist der Abstandshalter 184 in Figur 1 oben auf den ersten Abschnitt 158 des Flansches 154 aufgesetzt vorgesehen.

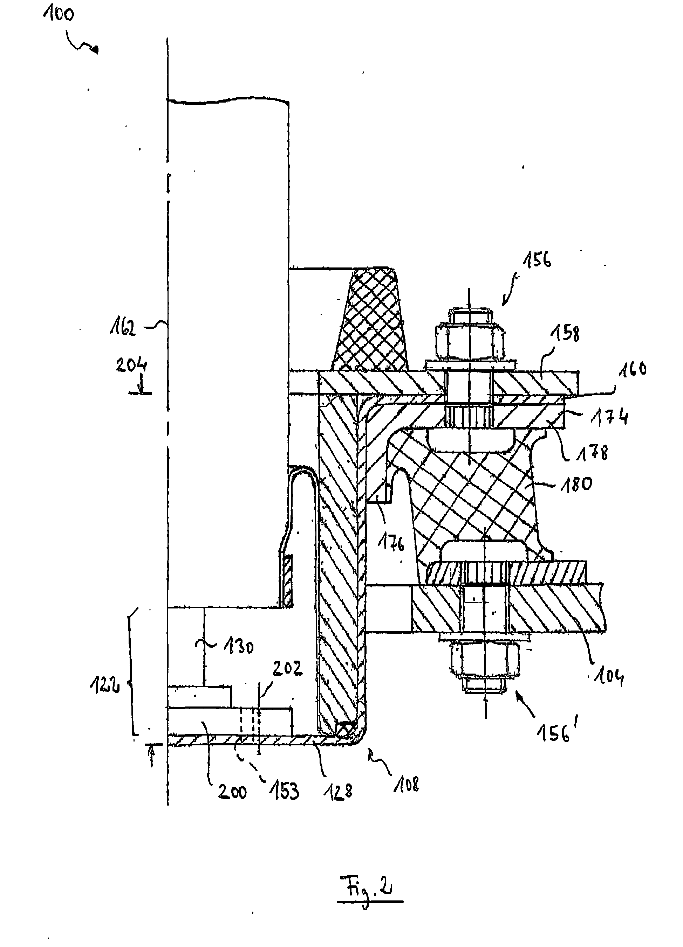

Figur 2 zeigt nun eine Variante der Lageranordnung 100 aus Figur 1.

Die Variante gemäß Figur 2 unterscheidet sich von der Lageranordnung 100 aus Figur 1 dadurch, dass sich der Kolben 122 aus der Kolbenstange 130 und einem Ansatz 200 zusammensetzt, welcher mit dem Boden 128 verschraubt ist (angedeutet durch die Schraube 202).

Weiterhin ist bei dem Ausführungsbeispiel gemäß Figur 2 das erste Stützteil 174 lediglich an das Gummiteil 180 anvulkanisiert. Der erste Abschnitt 176 des Stützteils 174 erstreckt sich nur geringfügig entlang der Kolbenachse 162. Beispielsweise kann sich der erste Abschnitt 176 um weniger als die Hälfte der Länge 204 der äußeren Wand 166 des Topfs 108 entlang der Kolbenachse 162 erstrecken.

Die L-Form des Stützteils 174 bestehend aus den Abschnitten 176 und 178 kann auch für das Stützteil 182 verwendet werden, dann allerdings mit dem vertikal ausgerichteten Abschnitt radial außen angeordnet und zum Flansch 154 gerichtet. Bei analoger Gestaltung des Gummiteils 180 am äußeren vertikalen Abschnitt des Stützteils 182 wie beim Stützteil 174 ergibt sich eine normal zur Achse 162 steifere Gummifeder 180. Dies kann zum Beispiel dadurch erreicht werden, dass der Abschnitt 176 verlängert wird und der Radiusübergang zur Gummifeder 180 um den Verlängerungsbetrag in Richtung der Verlängerung entsprechend versetzt wird. Analog ist bei dem Stützteil 182 zu verfahren. Eine weitere Möglichkeit sind ein Stützteil, oder mehrere Stützteile, welche zwischen den Stützteilen 174 und 182 angeordnet sind und fest mit der Gummifeder 180 verbunden sind. Solche Anordnungen sind allgemein als Schichtfedern, oder auch als Konuslager, bekannt.

Die Verbindungsleitung 153 durchgreift hier lediglich die Elemente 128 und 200.

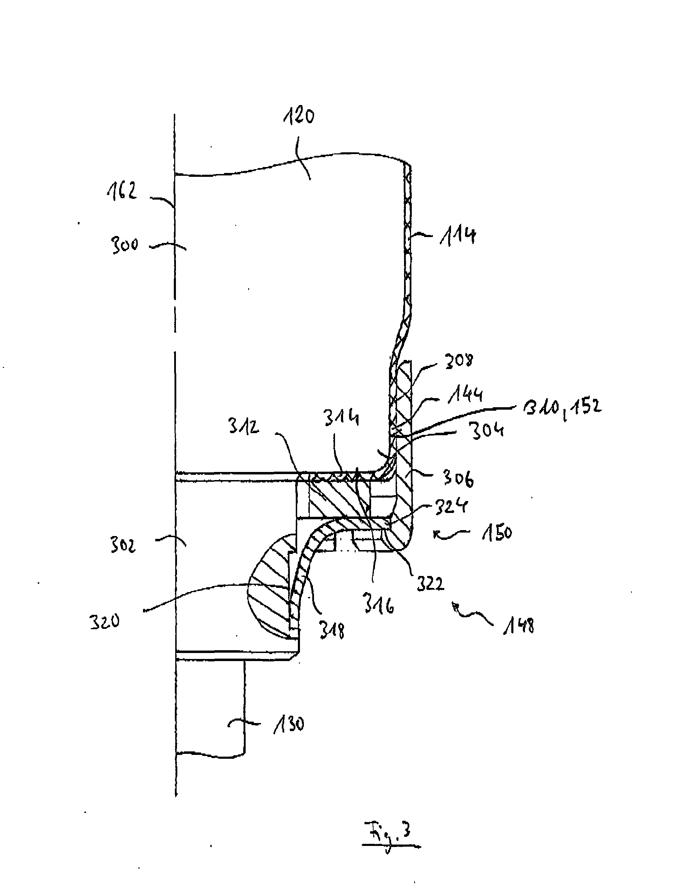

Anhand der Figuren 3-6 werden nachfolgend verschiedene Ausführungsbeispiele der Klemmeinrichtung 148 aus Fig. 1 näher erläutert.

Gemäß dem Ausführungsbeispiel nach Figur 3 ist der Zylinder 120 mit einem ersten Abschnitt 300 und einem sich an diesen mit kleinerem Durchmesser anschließenden zweiten Abschnitt 302 gebildet. Die Abschnitte 300, 302 bilden somit eine Schulter 304 aus. Um diese Schulter 304 ist das andere Ende 144 des Balgs 114 gelegt.

Gemäß dem vorliegenden Ausführungsbeispiel umfasst der Klemmring 150 einen ersten Klemmabschnitt 306, welcher einen Abschnitt 308 des Endes 144 des Balgs 114 radial zur Kolbenachse 162 gegen die Mantelfläche 310 des ersten Abschnitts 300 des Zylinders 120 klemmt. Dazu weisen der erste Abschnitt 300 des Zylinders 120 und der Abschnitt 308 des Balgs 114 ein geringfügiges Übermaß in Bezug auf den inneren Durchmesser des Klemmabschnitts 306 auf, so dass dieser beim Aufschieben desselben entlang der Kolbenachse 162 auf den ersten Abschnitt 300 des Zylinders 120 den Abschnitt 308 des Balgs 114 gegen den Abschnitt 300 des Zylinders 120 klemmt.

Der Klemmring 150 weist weiterhin einen zweiten Klemmabschnitt 312 auf, welcher einen sich an den Abschnitt 308 anschließenden Abschnitt 314 des Balgs 114 entlang der Kolbenachse 162 gegen die von der Schulter 304 ausgebildete Stirnfläche 316 klemmt. Der Abschnitt 314 ist gegenüber dem Abschnitt 304 abgewinkelt, so dass sich der Balg 114 bzw. dessen Ende 144 um die Schulter 304 legt. Damit ergibt sich nicht nur ein Reibschluss zwischen dem Ende 144 des Balgs 114 und dem Zylinder 120 sowie dem Klemmring 150, sondern auch ein Formschluss, welcher auf eine gewisse Steifigkeit des Endes 144 des Balgs 114 zurückgeht. Außerdem ergibt sich aufgrund des Herumlegens des Endes 144 um die Schulter 304 ein Effekt, welcher auch beim Herumwickeln eines Seils um einen Pfosten anzutreffen ist. Es entsteht somit eine sehr belastbare Befestigung des anderen Endes 144 des Balgs 114 an dem Zylinder 120.

Um nun den Klemmring 150 in der Richtung entlang der Kolbenachse 162 gegen die Stirnfläche 316 zu drücken, ist ein Spreizteil 318 vorgesehen, welches zwischen den Klemmring 150 und den zweiten Abschnitt 302 des Zylinders 120 eingespreizt ist. Bevorzugt greift das Spreizteil 318 einerseits in eine Nut 320 in dem zweiten Abschnitt 302 des Zylinders 120 und andererseits in Ausnehmungen 322 in den Klemmring 150 ein. Die Ausnehmungen 322 sind entlang eines Umfangs, welcher die Kolbenachse 162 als Mittelachse aufweist, voneinander beabstandet angeordnet. Jeweils ein Zahn 324 (in Figur 3 ist nur ein solcher Zahn dargestellt) greift dann in eine entsprechende Ausnehmung 322 ein. Das Spreizteil 318 ist somit bevorzugt als ein Metallring mit mehreren Zähnen an seinem einen Randabschnitt ausgebildet. Gemäß dem vorliegenden Ausführungsbeispiel sind der erste und zweite Klemmabschnitt 306, 312 als ein Teil, insbesondere als ein Kunststoffspritzgussteil, ausgeführt.

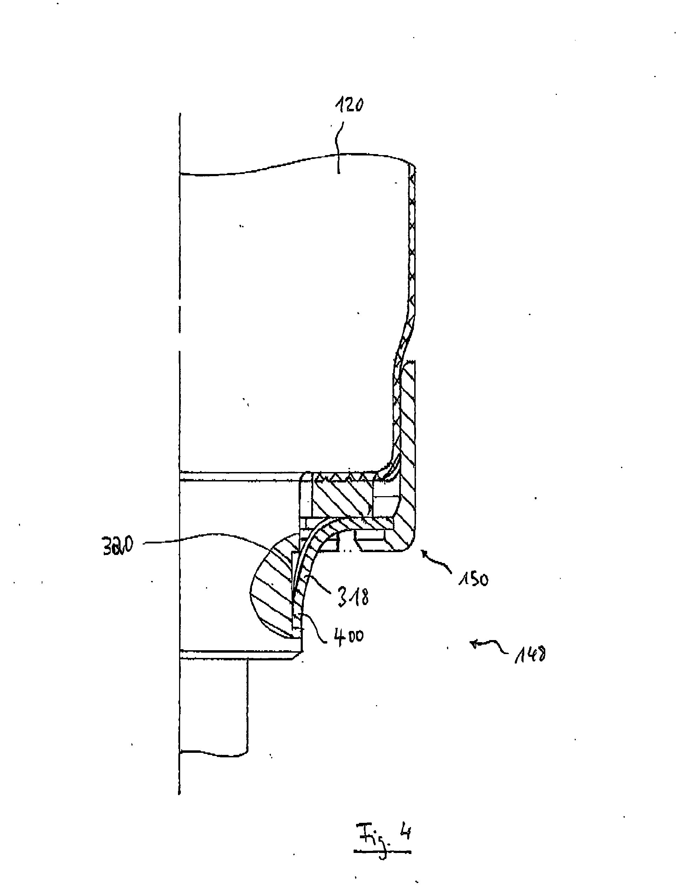

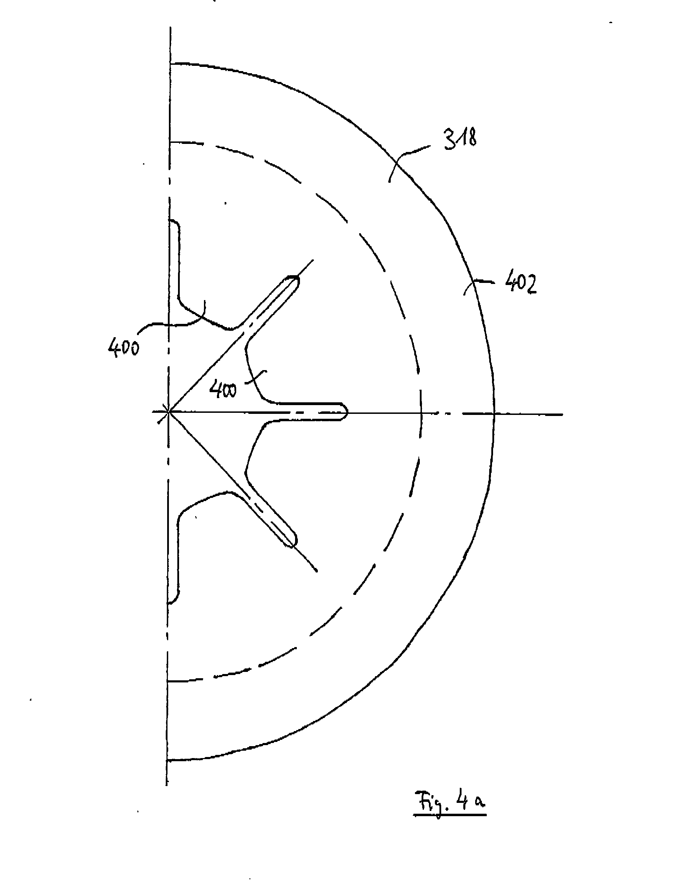

Figur 4 zeigt eine Variante gegenüber Figur 3, und Fig. 4a zeigt ein Spreizteil 318 aus Fig. 4 in einer Draufsicht.

Das Spreizteil 318 ist hier mit einer größeren Anzahl Zungen 400 ausgeführt, welche in die Nut 320 eingreifen, ausgeführt. In dieser hier ausgeführten Variante befinden sich am äußeren Rand 402 keine Zähne 324. Der Rand 402 greift vollständig in das Klemmteil 150 ein.

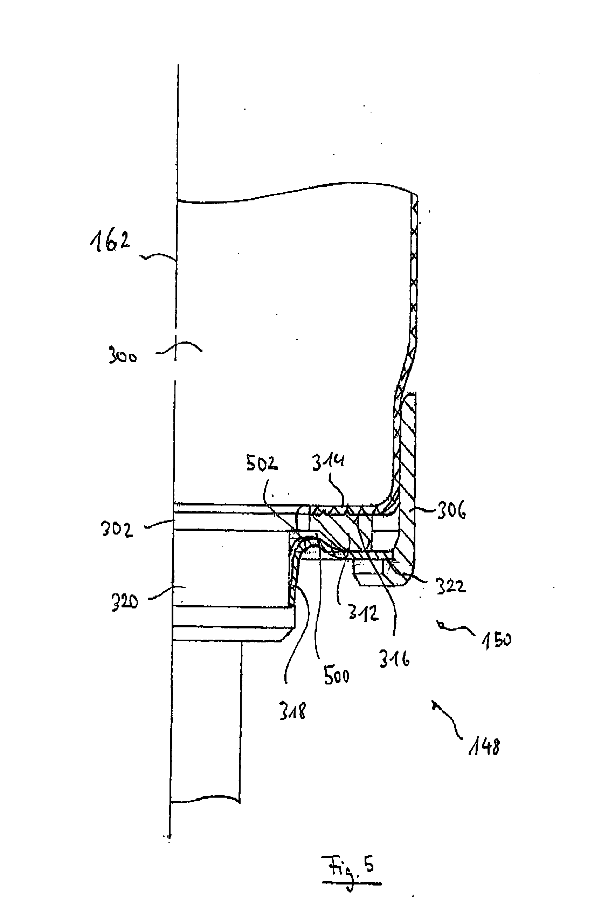

Figur 5 zeigt eine weitere Variante gegenüber Figur 3.

Bei dieser Variante ist der zweite Klemmabschnitt 312 mit einer Vertiefung 500 hin zu der Stirnseite 316 gebildet, in welche sich das Spreizteil 318 mit einem insbesondere mittigen Abschnitt 502 desselben hineinerstreckt.

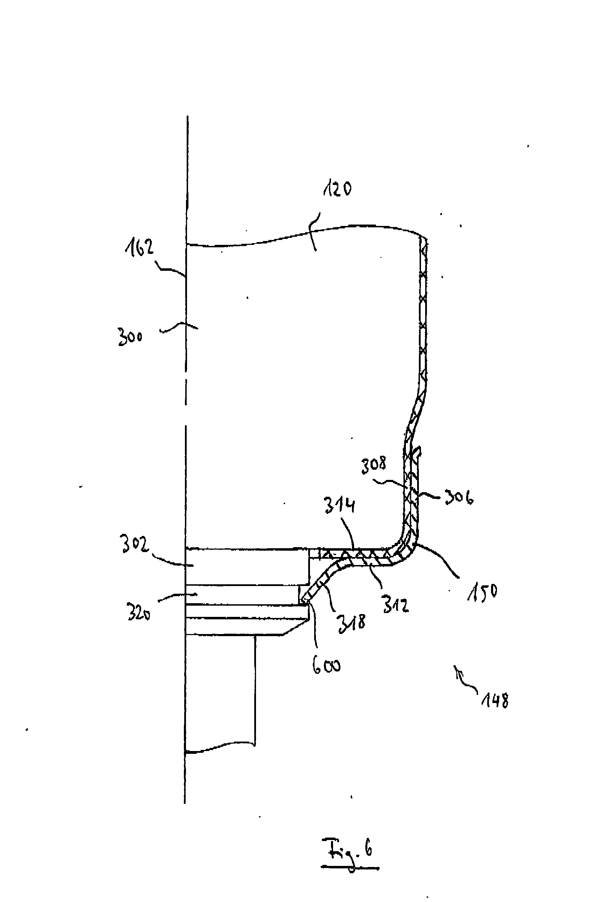

Figur 6 zeigt eine weitere Variante gegenüber Figur 3.

Bei dem Ausführungsbeispiel gemäß Figur 6 sind der Klemmring 150 und das Spreizteil 318 einstückig ausgeführt. Dabei schließt das Spreizteil 318 einstückig an den zweiten Klemmabschnitt 312 und der zweite Klemmabschnitt 312 wiederum einstückig an den ersten Klemmabschnitt 306 an. Somit ergibt sich für die Klemmeinrichtung 148 im Querschnitt eine in etwa doppelt gekröpfte Form. Die Funktion der Klemmabschnitte 306, 312 entspricht dabei der Funktion, wie im Zusammenhang mit Figur 3 beschrieben. Das Spreizteil 318 greift an seinem freien Ende 600 in die Nut 320 in dem zweiten Abschnitt 302 des Zylinders 120 ein. Bevorzugt ist die Klemmeinrichtung 148 bei dem Ausführungsbeispiel gemäß Figur 6 als ein elastischer Metallring gebildet.

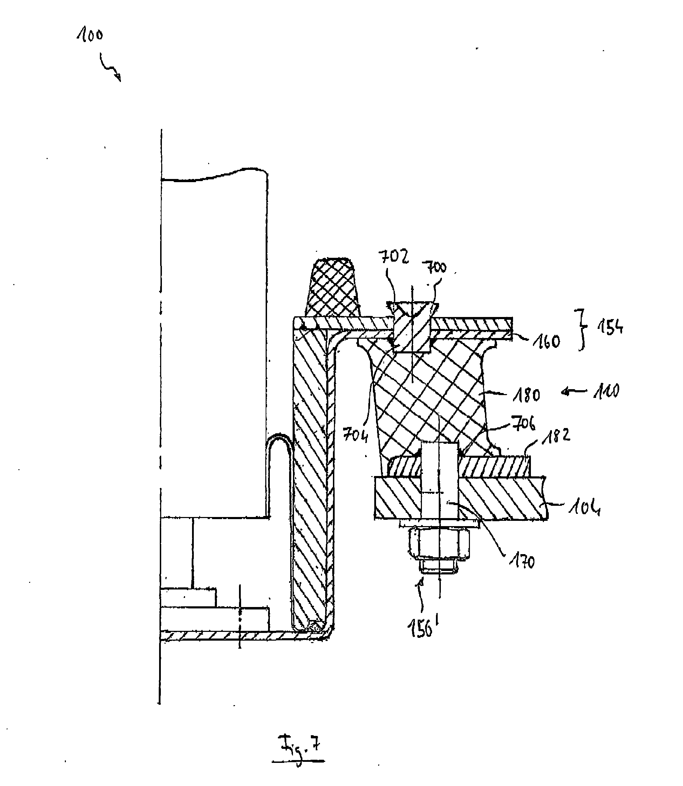

Figur 7 zeigt eine Variante gegenüber Figur 2.

Bei dieser Variante ist kein Stützteil 174 vorgesehen. Der zweite Abschnitt 160 des Flansches 154 ist somit direkt mit dem Gummiteil 180 fest verbunden.

Außerdem ist anstelle der Schraube 156 ein Niet 700 vorgesehen, welcher mit seinem Kopf 702 den Flansch 154 hintergreift und mit seinem Schaft 704 fest mit dem Abschnitt 160 verbunden ist, bevorzugt durch Schweißen bzw. Löten, angedeutet mit dem Bezugszeichen 706. Das Stützteil 182 der Gummifeder 110 ist mit dem Schaft 170 der Schraube 156' verschweißt oder verlötet, wie mit dem Bezugszeichen 706 angedeutet. Die Schraube 156' verbindet das Stützteil 182 bzw. die Gummifeder 110 mit dem Rahmen 104. Das Gummiteil 180 ist an den Abschnitt 160 des Flanschs 154 sowie an das Stützteil 182 mittels Anvulkanisierens fest verbunden.

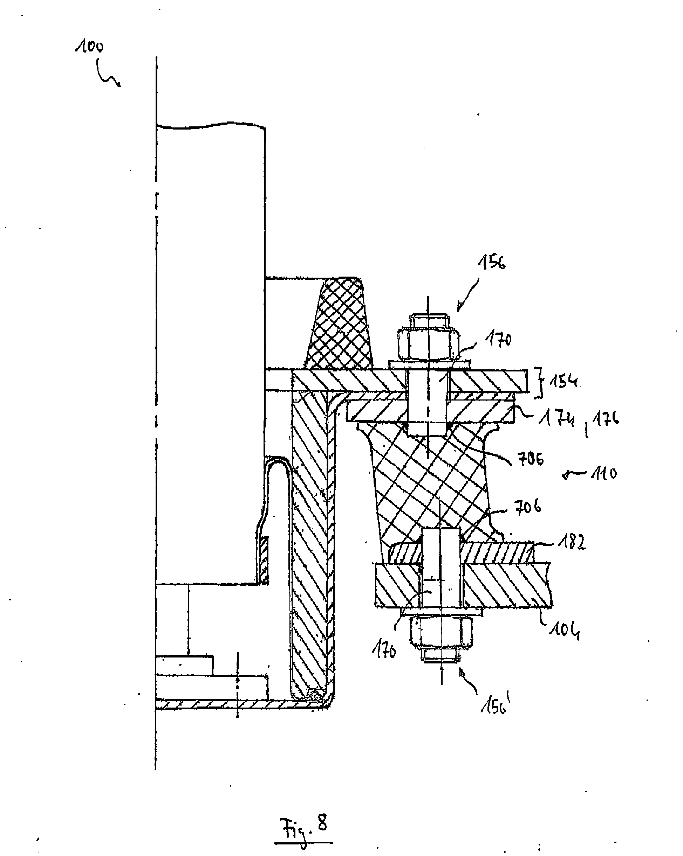

Figur 8 zeigt eine weitere Variante gegenüber Figur 2.

Bei dieser Variante ist das erste Stützteil 174 ohne den zweiten Abschnitt 178 ausgebildet und entspricht damit dem ersten Abschnitt 176.

Weiterhin sind die jeweiligen Schraubenschäfte 170 zur Verbindung der Gummifeder 110 mit dem Flansch 154 bzw. dem Rahmen 104 mit dem ersten Stützteil 174 bzw. dem zweiten Stützteil 182 verschweißt oder verlötet, wie durch die Bezugszeichen 706 angedeutet.

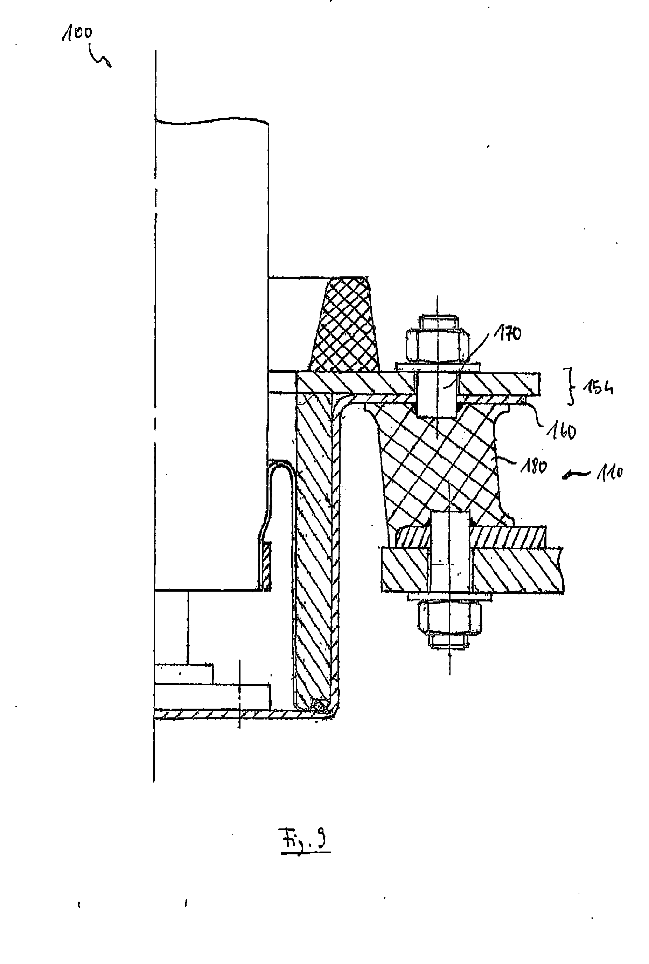

Figur 9 zeigt eine Variante gegenüber Figur 8.

Bei dieser Variante ist der zweite Abschnitt 160 des Flansches 154 fest mit dem Schaft 170 der Schraube 156 verbunden, angedeutet durch das Bezugszeichen 706, das heißt, auf das Stützteil 174 ist verzichtet worden.

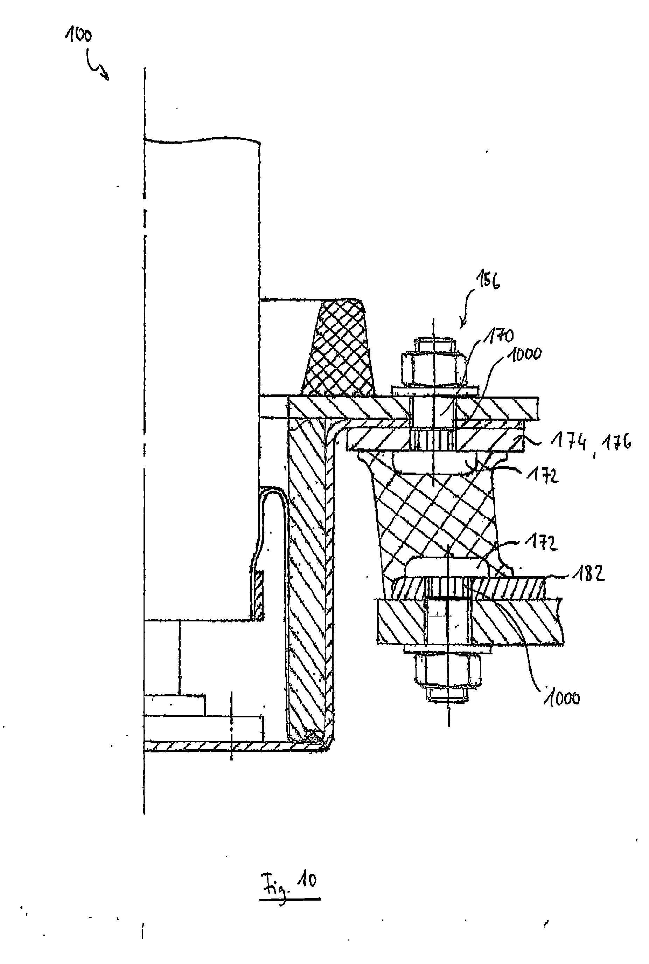

Figur 10 zeigt eine weitere Variante gegenüber Figur 8.

Bei dieser Variante sind anstelle der Schweiß- oder Lötstellen 706 Schraubenköpfe 172 vorgesehen sind, welche das erste Stützteil 174 bzw. das zweite Stützteil 182 jeweils hintergreifen. Durch die Rändelung 1000 des Schraubenschafts 170, welche in das Stützteil 174 bzw. 182 eingreift, wird eine verdrehsteife Verbindung der Schraube 156 mit den Stützteilen 174, bzw. 182 sichergestellt.

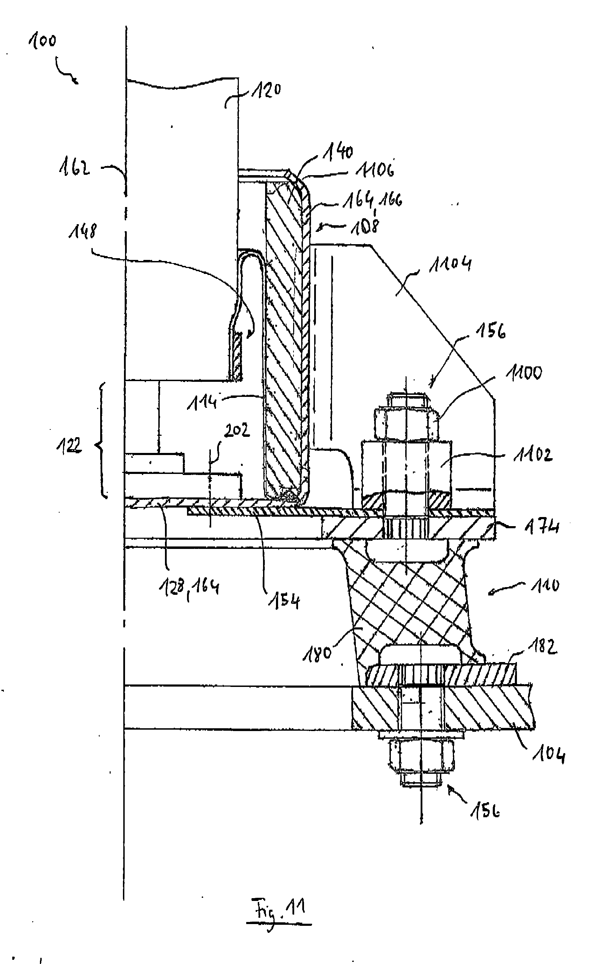

Figur 11 zeigt eine weitere Variante gegenüber Figur 2.

Bei dem Ausführungsbeispiel gemäß Figur 11 ist der Flansch 154 mit dem Boden 128 des Topfs 108 außenseitig verbunden, insbesondere verschweißt, oder verklebt. Innenseitig ist der Topf 108 bzw. der Boden 128 des Topfs 108 mit dem Kolben 122 verbunden, insbesondere verschraubt. Der topfförmige Teil 164 des Topfs 108 und die Gummifeder 110 sind somit auf gegenüberliegenden Seiten des Flanschs 154 angeordnet und nicht auf derselben Seite, wie bei den Ausführungsbeispielen gemäß den Fig. 1, 2 und 7 bis 10 der Fall. Das Stützteil 174 erstreckt sich lediglich parallel zu dem Flansch 154 und ist mit diesem beispielsweise mittels der Schraube 156 direkt verbunden. Zwischen einer Mutter 1100 der Schraube 156 und dem Flansch 154 kann eine Distanzhülse 1102 angeordnet sein. Die Distanzhülse 1102 stellt eine Restklemmkraft sicher und verringert die Flächenpressung vorteilhaft. Der Topf 108, insbesondere die äußere Wand 166 desselben, ist mittels mehrerer Stützarme 1104 mit dem Flansch 154 verbunden. Die Stützarme 1104 können mit dem Flansch 154 einstückig gebildet sein. Die Stützarme 1104 können mit dem Flansch 154 verschweißt oder verklebt sein. Die Stützarme 1104 können auch aus Kunststoff ausgebildet sein. Insbesondere bei diesem Ausführungsbeispiel kann das topfförmige Teil 164 als Aluminiumdruckgussteil bzw. Tiefziehteil ausgebildet werden. Die äußere Wand 164 kann an ihrem freien Ende 1106 hin zur Kolbenachse 162 abgekantet vorgesehen sein, so dass der Einsatz 140 formschlüssig in dem topfförmigen Teil 164 gehalten wird.

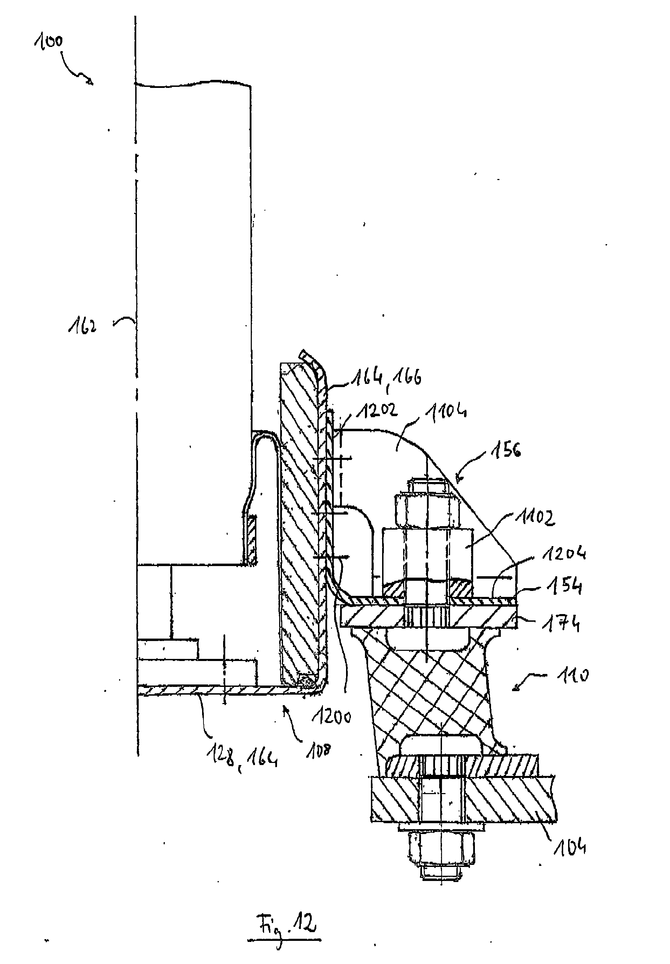

Das Ausführungsbeispiel gemäß Figur 12 stellt einen "Hybrid" zwischen den Ausführungsbeispielen nach Figur 2 und Figur 11 dar.

Bei dem Ausführungsbeispiel nach Figur 12 ist der Flansch 154 mit der äußeren Wand 166 des Topfs 108 fest verbunden, beispielsweise verschraubt (angedeutet durch die Schrauben 1200), verschweißt oder verklebt. Dazu weist der Flansch 154 einen ersten Abschnitt 1202, welcher sich koaxial zu der Wand 166 erstreckt, und einen zweiten Abschnitt 1204 auf, welcher sich radial zur äußeren Wand 166 bzw. zur Kolbenachse 162 erstreckt. Der zweite Abschnitt 1204 liegt auf der Gummifeder 110, insbesondere dem ersten Stützteil 174, auf und ist mit dieser mittels der Schraube 156 fest verbunden. Der erste und zweite Abschnitt 1202, 1204 erstrecken sich bevorzugt unter einem rechten Winkel zueinander. Die Stützarme 1104 verbinden dabei den ersten und zweiten Abschnitt 1202, 1204 des Flansches 154 fest miteinander.

Obwohl die Erfindung vorliegend anhand bevorzugter Ausführungsbeispiele beschrieben wurde, ist sie darauf keineswegs beschränkt, sondern auf vielfältige Weise modifizierbar. Insbesondere schließt "ein" keine Vielzahl aus.

Insbesondere sei darauf hingewiesen, dass die vorliegend beschriebenen Ausführungsbeispiele beliebig miteinander kombinierbar sind. So können beispielsweise die verschiedenen, vorliegend beschriebenen Verbindungstechniken zwischen der Gummifeder 110 und dem Flansch 154 bzw. dem Rahmen 104 bei jedem der Ausführungsbeispiele gleichermaßen angewendet werden.

### BEZUGSZEICHENLISTE

- 100: Lageranordnung
- 102: Lager
- 104: Rahmen
- 106: Kabine
- 108: Topf
- 110: Gummifeder
- 112: Stoßdämpfer
- 114: Balg
- 116: Seite
- 118: Seite
- 120: Zylinder
- 122: Kolben
- 124: Gasvolumen
- 126: Abschnitt
- 128: Boden
- 130: Kolbenstange
- 132: erstes Klemmteil
- 134: zweites Klemmteil
- 136: Dichtung
- 138: Ende
- 140: Wand
- 142: Wulst
- 144: Ende
- 146: Durchtritt
- 148: Klemmeinrichtung
- 150: Klemmring
- 152: Abschnitt
- 153: Verbindungselement
- 154: Flansch
- 156: Schraube
- 156': Schraube
- 158: erster Abschnitt
- 160: zweiter Abschnitt
- 162: Kolbenachse
- 164: topfförmiges Teil
- 166: äußere Wand
- 168: Öffnung
- 170: Schaft
- 172: Kopf
- 174: erstes Stützteil
- 176: erster Abschnitt
- 178: zweiter Abschnitt
- 180: Gummiteil
- 182: zweites Stützteil
- 184: Abstandshalter
- 200: Ansatz
- 202: Schraube
- 204: Abstand
- 300: erster Abschnitt
- 302: zweiter Abschnitt
- 304: Schulter
- 306: erster Klemmabschnitt
- 308: Abschnitt
- 310: Mantelfläche
- 312: zweiter Klemmabschnitt
- 314: Abschnitt
- 316: Stirnfläche
- 318: Spreizteil
- 320: Nut
- 322: Ausnehmung
- 324: Zahn
- 400: Zunge
- 402: Rand
- 500: Vertiefung
- 502: Abschnitt
- 600: Ende
- 700: Niet
- 702: Kopf
- 704: Schaft
- 706: Schweißstelle
- 1000: Rändelung
- 1100: Mutter
- 1102: Distanzhülse
- 1104: Stützarm
- 1106: Ende
- 1200: Schraube
- 1202: erster Abschnitt
- 1204: zweiter Abschnitt

## Patentansprüche

1. Lager (102), aufweisend:
einen Topf (108);
eine Gummifeder (110), welche dazu eingerichtet ist, sich an ihrer einen Seite (116) an einem ersten Körper (104) abzustützen, und welche an ihrer anderen Seite (118) mit dem Topf (108) gekoppelt ist;
einen Stoßdämpfer (112), welcher einen Zylinder (120) und einen in diesem geführten Kolben (122) umfasst, wobei der Zylinder (120) dazu eingerichtet ist, sich an einem zweiten Körper (106) abzustützen, und der Kolben (122) mit dem Topf (108) verbunden ist; und
einen Balg (114), welcher zusammen mit dem Zylinder (120) ein als Gasfeder fungierendes Gasvolumen (124) zumindest abschnittsweise umschließt und sich zumindest abschnittsweise an dem Topf (108) abstützt.

2. Lager nach Anspruch 1,
**dadurch gekennzeichnet,**
**dass** der Topf (108) eine Wand (140) und einen Boden (128) aufweist, wobei der Kolben (122) mit dem Boden (128) des Topfes (108) verbunden ist und/oder der Balg (114) an seinem einen Ende (138) zwischen die Wand (140) und den Boden (128) geklemmt ist und diese gegeneinander abdichtet.

3. Lager nach Anspruch 1 oder 2,
**dadurch gekennzeichnet,**
**dass** der Balg (114) an seinem anderen Ende (144) an dem Zylinder (120) dichtend angebracht ist und einen Durchtritt (146) für den Kolben (122) aufweist.

4. Lager nach einem der vorhergehenden Ansprüche,
**dadurch gekennzeichnet,**
**dass** das andere Ende (144) des Balgs (114) mittels einer Klemmeinrichtung (148) an dem Zylinder (120) angebracht ist, wobei die Klemmeinrichtung (140) einen Klemmring (150), welcher das andere Ende (144) des Balgs (114) reibschlüssig und ggf. formschlüssig gegen einen ersten Abschnitt (152, 300) des Zylinders (120) klemmt, und bevorzugt ein Spreizteil (318) aufweist, welches zwischen den Klemmring (150) und einen zweiten Abschnitt (302) des Zylinders (120) eingespreizt ist, um den Klemmring (150) mit einer Kraft für das Klemmen zu beaufschlagen.

5. Lager nach Anspruch 4,
**dadurch gekennzeichnet,**
**dass** der zweite Abschnitt (302) des Zylinders (120) eine Nut (320) aufweist, in welche das Spreizteil (318) eingreift.

6. Lager nach Anspruch 4 oder 5,
**dadurch gekennzeichnet,**
**dass** der erste Abschnitt (300) des Zylinders (120) eine Mantelfläche (310) und/oder eine Stirnfläche (316) umfasst, wobei der Klemmring (150) einen ersten Klemmabschnitt (306) für ein Klemmen des anderen Endes (144) des Balgs (114) radial zur Kolbenachse (162) gegen die Mantelfläche (310) und/oder einen zweiten Klemmabschnitt (312) für ein Klemmen des anderen Endes (144) des Balgs (114) entlang der Kolbenachse (162) gegen die Stirnfläche (316) aufweist.

7. Lager nach Anspruch 6,
**dadurch gekennzeichnet,**
**dass** der zweite Klemmabschnitt (312) mit einer Vertiefung (500) ausgebildet ist, in welche sich das Spreizteil (318) zumindest abschnittsweise hineinerstreckt.

8. Lager nach einem der vorangehenden Ansprüche,
**dadurch gekennzeichnet,**
**dass** der Topf (108) mit einem Flansch (154) gebildet ist, welcher mit der Gummifeder (110), insbesondere mittels einer Schraube (156) oder eines Niets (700), gekoppelt ist.

9. Lager nach einem der vorhergehenden Ansprüche,
**dadurch gekennzeichnet,**
**dass** die Gummifeder (110) ein in ein Gummiteil (180) derselben einvulkanisiertes und/oder ein an dieses anvulkanisiertes Stützteil (174) aufweist, welches einen ersten Abschnitt (176), der sich koaxial zur Wand (140) des Topfs (108) erstreckt, und/oder einen zweiten Abschnitt (178) aufweist, der sich parallel zu dem Flansch (154) erstreckt.

10. Lager nach Anspruch 9,
**dadurch gekennzeichnet,**
**dass** der zweite Abschnitt (178) des Stützteils (174) mit der Schraube (156) oder dem Niet (700) verbunden, insbesondere formschlüssig verbunden, verschweißt oder verlötet ist.

11. Lager nach einem der vorhergehenden Ansprüche,
**dadurch gekennzeichnet,**
**dass** der Topf (108) ein topfförmiges Teil (164), insbesondere ein Tiefzieh-oder Gussteil, und/oder einen rohrförmigen Einsatz (140) aufweist, wobei bevorzugt ein erster Abschnitt des topfförmigen Teils (164) den Boden (128) des Topfs (108), der rohrförmige Einsatz die Wand (140) des Topfs (108) und/oder ein zweiter Abschnitt des topförmigen Teils (164) eine weitere Wand (166) des Topfs (108), gegen welche die Wand (140) des Topfs (108) in radialer Richtung bevorzugt anliegt, bildet.

12. Lager nach einem der Ansprüche 8-11,
**dadurch gekennzeichnet,**
**dass** der Flansch (154) an dem offenen Ende des Topfes (108) angeordnet ist und/oder sich aus einem ersten Abschnitt (158), welcher mit dem rohrförmigen Einsatz (140) insbesondere einstückig verbunden ist, und einem zweiten Abschnitt (160) zusammensetzt, welcher mit dem topfförmigen Teil (164) insbesondere einstückig verbunden ist, wobei sich die Schraube (154) oder der Niet (700) bevorzugt durch jeweilige Öffnungen (108) in dem ersten und zweiten Abschnitt (158, 160) erstreckt.

13. Lager nach einem der Ansprüche 8-12,
**dadurch gekennzeichnet,**
**dass** der Flansch (154) mit dem Boden (128) des Topfes (108) außenseitig verbunden, insbesondere verschweißt oder verklebt, ist und/oder der Topf (108) innenseitig mit dem Kolben (122) verbunden ist.

14. Lager nach einem der vorhergehenden Ansprüche,
**dadurch gekennzeichnet,**
**dass** der Topf (108) mittels Stützarmen (1104) mit dem Flansch (154) verbunden ist.

15. Lageranordnung (100), aufweisend
einen ersten Körper (104) in Form eines Rahmens eines Fahrzeugs, einen zweiten Körper (106) in Form einer Kabine oder Achse des Fahrzeugs und
ein Lager (102) nach einem der vorhergehenden Ansprüche, welches die Kabine oder Achse gegen den Rahmen abstützt.
